# EUROPÄISCHE PATENTSCHRIFT

(11) **EP 3 067 508 B1**
(45) Veröffentlichungstag und Bekanntmachung des Hinweises auf die Patenterteilung: **28.04.2021**
(21) Anmeldenummer: 16159391.8
(22) Anmeldetag: 09.03.2016
(51) Int. Cl.: E06B 9/58, E06B 9/06, A01K 1/00

(54) **WANDSYSTEM MIT VERTIKAL VERSTELLBARER WAND**
WALL SYSTEM WITH VERTICALLY ADJUSTABLE WALL
SYSTEME DE PAROI AVEC MUR REGLABLE VERTICALEMENT

(30) Priorität: 09.03.2015 DE 102015002870; 18.05.2015 DE 102015107757
(43) Veröffentlichungstag der Anmeldung: 14.09.2016
(73) Patentinhaber: AGROTEL GmbH, 94152 Neuhaus/Inn (DE)
(72) Erfinder: Laner, Cyriak, 94152 Neuhaus/Inn (DE)
(74) Vertreter: Prinz & Partner mbB

(56) Entgegenhaltungen:
- WO-A1-80/02036
- WO-A1-2013/015681
- DE-A1- 10 318 146

## Beschreibung

Die Erfindung betrifft ein Wandsystem mit einem flexiblen Wandelement, mit dem eine Seitenwand in landwirtschaftlichen oder industriellen Gebäuden oder Gebäudeteilen gebildet werden kann. Insbesondere kann mit dem Wandsystem bei Bedarf ein Windschutz gebildet werden, der eine Öffnung zwischen Trägern eines Gebäudes oder Gebäudeteils verschließt. Bei dem Gebäude oder Gebäudeteil kann es sich um eine Konstruktion mit (nahezu) vertikalen Trägern handeln, die ein Dach tragen, also um konstruktive Wandteile des Gebäudes oder Gebäudeteils.

Sporthallen, Produktionshallen, Lagerhallen und insbesondere Tierhaltungsgebäude stellen an die Möglichkeiten einer natürlichen Belüftung der Gebäude besondere Ansprüche. Ein weiterer wichtiger Aspekt ist die natürliche Belichtung des Gebäudeinneren.

Es ist bekannt, die Seitenwände solcher Gebäude mit großen Öffnungen zu versehen, die mittels einer Plane verschlossen werden können. Dies ermöglicht es, die Öffnungen vollständig zu öffnen, indem die Plane (ein sogenannter "Curtain") abgesenkt wird. Hierdurch kann eine Querbelüftung erzielt werden, so dass beispielsweise im Sommer bei Außentemperaturen von +35°C eine gute Belüftung möglich ist. Wenn allerdings im Winter Außentemperaturen von -30°C herrschen, stoßen solche Planenvorhänge an ihre Grenzen, da der Wärmeverlust der Seitenwände so groß ist, dass mit üblichen Heizvorrichtungen die Wärmeverluste nicht kompensiert werden können.

Ein "curtain" dieser Art zur Abdichtung von Schaufenstern, Gewächshäusern oder auch Fabrikstüren ist beispielsweise aus der WO 80/02036 bekannt. Dieser besteht aus einem aufblasbaren Element, welches mehrere luftdichte Teile aufweist. Im nicht aufgeblasenen Zustand liegt das Element aufgewickelt auf einer Wickelwelle vor. Wird anschließend Luft in die luftdichten Teile gepumpt, bläst sich das Element auf und wickelt sich dadurch von der Wickelwelle ab, sodass es ausgefahren wird.

Die DE 103 18 146 A1 beschreibt einen wickelbaren Dämmkörper, der zumindest in bestimmten Bereichen aufblasbar ist. Es handelt sich hierbei um einen Rollladen, der im Bereich seiner Seitenkanten aufblasbar ist, um sich dadurch an die Führungsschienen zu schmiegen und eine hermetische Abdichtung der Gebäudeöffnung zur Außenluft zu gewährleisten.

Die WO 2013/015681 A1 zeigt ein Wandsystem gemäß dem Oberbegriff des Anspruchs 1.

Die Aufgabe der Erfindung besteht darin, ein Seitenwandlüftungssystem bereitzustellen, das einfach zu öffnen ist, so dass bei Bedarf die gesamte Seitenwand freigegeben wird, und das eine Isolierung und Abdichtung der Seitenwand gewährleistet, so dass bei Bedarf die Energieabstrahlung nach außen begrenzt werden kann, wodurch entweder im Falle einer Stallanlage die Energiezufuhr aus der Eigenwärme der sich darin befindenden Tiere ausreichend ist oder im Falle einer Fremdheizung die Energiekosten niedrig sind.

Zur Lösung dieser Aufgabe ist erfindungsgemäß ein Wandsystem mit den Merkmalen des Anspruchs 1 vorgesehen. Dieses Wandsystem zeichnet sich durch hohe Flexibilität, geringe Kosten und gleichzeitig eine sehr gute Abdichtung zwischen dem Wandelement und der Führung aus. Ein weiterer Vorteil besteht darin, dass aufgrund der mindestens einen Kammer im Wandelement eine thermische Isolierung gebildet ist. Hierdurch können alle Anforderungen auch bei einem Temperaturdelta von 65°C zwischen Sommer- und Winteraußentemperaturen erfüllt werden. Durch die Ausgestaltung des Wandsystems als "Luftmatratze" ist es außerdem möglich, die Seitenwand im aufgeblasenen (und damit isolierenden) Zustand vertikal eine gewisse Strecke (z.B: 30 cm) zu verschieben, so dass bei Bedarf Frischluft auch bei niedrigen Außentemperaturen zugeführt werden kann. Außerdem kann das Wandelement mit dem Seilzugsystem und dem Antriebsmotor mit geringem Aufwand innerhalb der Führung verstellt werden. Am oberen Verstärkungselement kann der Antrieb angreifen, mit dem das Wandelement verstellt werden kann, und der untere Rand des Wandelements kann mittels des Verstärkungselementes zuverlässig auf einer Unterlage aufliegen. Durch das mittige Verstärkungselement wird die Stabilität insbesondere gegen Windlasten erhöht. Die sich im Wesentlichen vertikal erstreckende Führung steigert die Stabilität bei Windlasten, wobei hierfür beispielsweise C-Profile aus Metall verwendet werden können, sodass die Führung kostengünstig hergestellt werden kann. Mit dem Luftführungselement ("Zuluftleitplane") kann dann, wenn das Wandelement geringfügig nach unten abgelassen ist, diejenige Luft geführt werden, die oberhalb des oberen Randes des Wandelements in das Gebäude eintritt.

Gemäß einer Ausgestaltung der Erfindung ist vorgesehen, dass das Wandelement aus miteinander verschweißten Kunststofffolien besteht. Diese Folien haben eine lange Lebensdauer, sind bei geeigneter Materialauswahl UV-beständig und können gut miteinander verschweißt werden, sodass mit geringem Aufwand die Kammer innerhalb des Wandelements gebildet werden kann.

Vorzugsweise sind mehrere nebeneinander liegende Kammern vorgesehen. Mit den mehreren Kammern, die sich insbesondere parallel zueinander und waagerecht erstrecken, lässt sich besser gewährleisten, dass das Wandelement, wenn die Kammern unter Druck gesetzt (also aufgeblasen) sind, die gewünschte Form hat. Weiterhin ergibt sich eine verbesserte Isolation.

Es kann auch vorgesehen sein, dass die Kammern vertikal angeordnet sind.

Gemäß einer Ausgestaltung der Erfindung ist vorgesehen, dass die Kammern durch Überströmöffnungen miteinander verbunden sind. Dies ermöglicht es, die mehreren Kammern mit lediglich einer einzigen Anschlussöffnung für die Druckquelle zu befüllen.

Durch das Wandelement mit Verstärkungselementen zu versehen, steigt die Stabilität bei Belastungen in Querrichtung.

Wenn das Wandelement eine große Höhe hat, können auch mehrere Verstärkungselemente auf unterschiedlichen Höhen vorgesehen sein.

Gemäß einer Ausgestaltung der Erfindung ist ein Druckwächter vorgesehen, der den Druck in der Kammer erfasst. Hierdurch kann gewährleistet werden, dass die Druckquelle abgeschaltet wird, wenn der gewünschte Druck innerhalb der Kammer des Wandelements erreicht ist.

Vorzugsweise sind die Führungsprofile mit mindestens einem Dichtungsstreifen versehen. Dieser verbessert die Abdichtungswirkung zwischen der Führung und dem Wandelement und verhindert außerdem, dass das Wandelement durch Reibung an der Führung beschädigt wird.

Gemäß einer Ausgestaltung der Erfindung ist zwischen den Führungsprofilen ein sich im Wesentlichen vertikal erstreckendes Abstützprofil vorgesehen. An diesem kann sich das Wandelement anlegen, wenn hohe Querlasten wirken.

Gemäß einer Ausgestaltung der Erfindung ist der Antriebsmotor innerhalb eines Rohres angeordnet, mit dem das Seil aufgewickelt wird. Hierdurch ergibt sich eine kompakte Bauweise. Ferner ist der Antriebsmotor schmutzgeschützt aufgenommen.

Gemäß einer alternativen Ausgestaltung kann der Antriebsmotor auch als Getriebemotor ausgeführt sein.

Die Druckquelle kann insbesondere ein Gebläse sein, sodass Umgebungsluft angesaugt und in die Kammer des Wandelements eingeblasen werden kann.

Vorzugsweise ist ein Gebläsemotor vorgesehen, der in beiden Drehrichtungen betrieben werden kann. Dies ermöglicht es nicht nur, die Kammer des Wandelements aufzublasen, sondern die in das Wandelement eingebrachte Luft kann aktiv absaugen zu können. Dadurch wird es erleichtert, anschließend das Wandelement nach unten abzusenken, sodass es sich platzsparend zusammenlegt.

Gemäß einer Ausgestaltung der Erfindung ist ein bauseitiger Sockel vorgesehen, an dem der untere Rand des Wandelements anliegt. Hierdurch ist eine gute Abdichtung gewährleistet.

Die Erfindung wird nachfolgend anhand einer bevorzugten Ausführungsform beschrieben, die in den beigefügten Zeichnungen dargestellt ist. In diesen zeigen:
- Figur 1 schematisch einen Vertikalschnitt durch ein erfindungsgemäßes Wandsystem;
- Figur 2 schematisch einen Schnitt entlang der Ebene II-II von Figur 1;
- Figur 3 eine Prinzipskizze des flexiblen Wandelements und der damit in Verbindung stehenden Druckquelle;
- Figur 4 in einer schematischen Ansicht das flexible Wandelement und den zugeordnete Antrieb;
- Figur 5 in einer schematischen Seitenansicht einen Teil einer Seitenstruktur eines Gebäudes mit daran angebrachtem Wandsystem in einem vollständig hochgefahrenen Zustand; und
- Figur 6 in einer Darstellung entsprechend derjenigen von Figur 5 das Wandsystem mit geringfügig abgelassenem Wandelement.

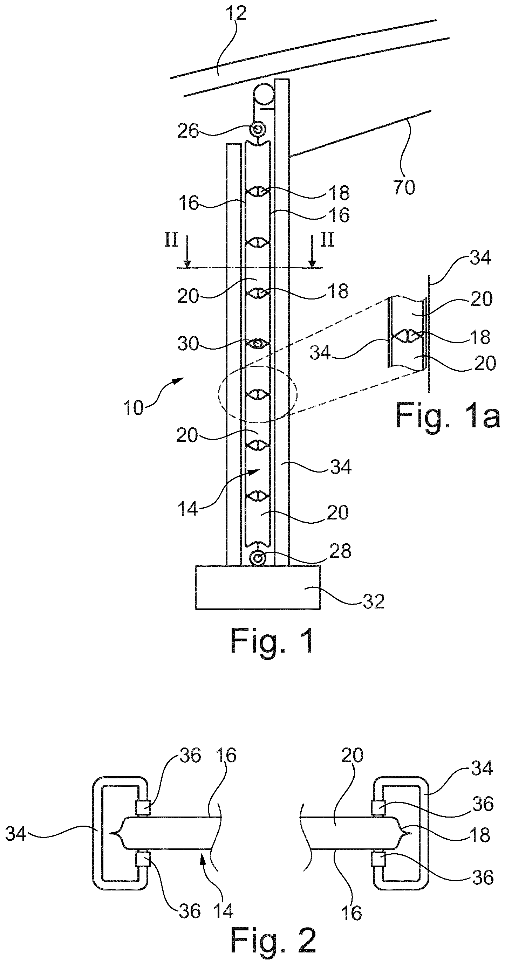

In Figur 1 ist ein Wandsystem 10 gezeigt, mit dem eine flexible Seitenwand für ein Gebäude gebildet werden kann, insbesondere ein landwirtschaftliches oder industrielles Gebäude. Dabei dient das Wandsystem 10 dazu, eine Öffnung in der Seitenwand bei Bedarf möglichst dicht zu verschließen. Die Öffnung kann beispielsweise zwischen sich (nahezu) vertikal erstreckenden Trägern gebildet sein, die ein Dach 12 tragen.

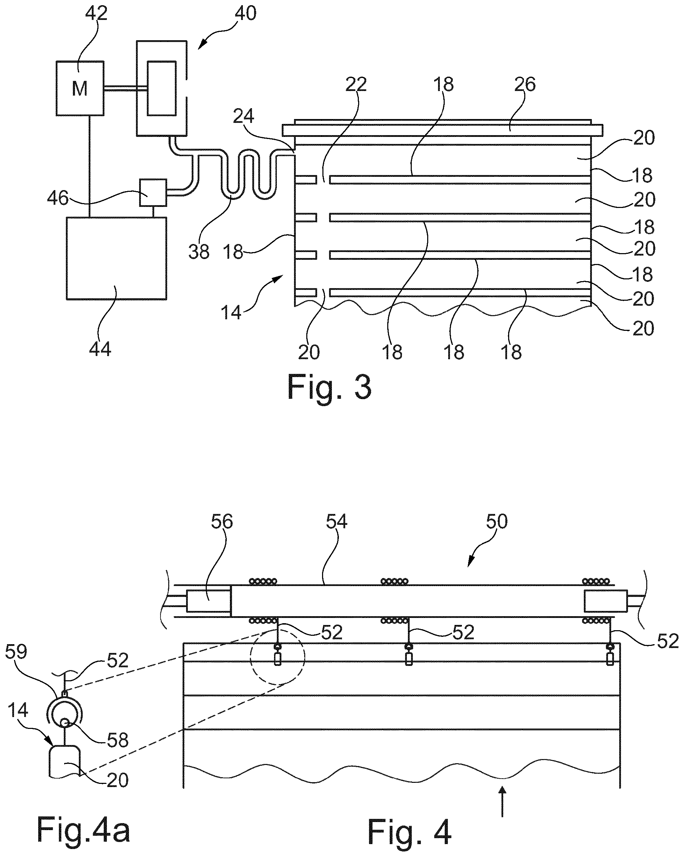

Das Wandsystem 10 weist ein Wandelement 14 auf, das aus Kunststoff besteht. Bei der gezeigten Ausführungsform besteht das Wandelement 14 aus zwei Lagen 16 einer Kunststofffolie, die bereichsweise miteinander verschweißt sind (siehe die Schweißnähte 18), sodass mehrere Kammern 20 innerhalb des Wandelements 14 abgegrenzt sind (siehe auch Figur 3).

Zwischen den einzelnen Kammern 20 sind Überströmöffnungen 22 vorgesehen, sodass sämtliche Kammern 20 des Wandelements 14 ausgehend von einer Anschlussöffnung 24 befüllt werden können.

Das Wandelement 14 weist mehrere waagrechte Verstärkungselemente auf, die hier jeweils durch ein Rohr 26, 28, 30 gebildet sind. Das obere Rohr 26 bildet den oberen Rand des Wandelements 14 und kann beispielsweise in einer geeigneten Tasche aufgenommen sein.

Das untere Rohr 28 bildet den unteren Rand des Wandelements 14. Es liegt auf einer Unterlage 32 an, die entweder der Boden oder ein bauwerkseitiger Sockel sein kann.

Das Rohr 30 ist etwa mittig angeordnet und gewährleistet eine Verstärkung zwischen dem oberen und dem unteren Rohr 26, 28.

Das Wandelement 14 ist entlang seiner Seitenränder in einer Führung 34 aufgenommen, die hier zwei einander gegenüberliegende Metallprofile mit einem C-förmigen Querschnitt aufweist (siehe insbesondere Figur 2). Die Führungsprofile 34 sind dabei vorzugsweise an den vertikalen Trägern des Bauwerks angebracht.

An den freien Enden der Schenkel der C-Profile ist jeweils ein Dichtungsstreifen 36 angebracht, der als Dichtungsbürste, Dichtungsgummi oder Ähnliches ausgeführt ist. Er dient zum einen dazu, einen Verschleiß der beiden Lagen 16 in dem Bereich zu verhindern, in dem das Wandelement 14 an der Führung 34 anliegt. Zum anderen dient der Dichtungsstreifen dazu, möglichst luftdicht zwischen der Führung 34 und dem Wandelement 14 abzudichten.

An die Anschlussöffnung 24 ist über einen flexiblen Schlauch 38 eine Druckquelle 40 angeschlossen, die hier als Gebläse ausgeführt ist. Es kann sich insbesondere um ein Radialgebläse handeln.

Abweichend von der Darstellung in Figur 3 kann die Druckquelle 40 auch an den unteren Rand des Wandelements 14 angeschlossen werden.

Das Radialgebläse 40 wird angetrieben von einem Gebläsemotor 42, der das Radialgebläse in beiden Drehrichtungen betreiben kann. Hierdurch können die Kammern 20 nicht nur mit Luft aufgepumpt werden, sondern die Luft kann auch bei Bedarf wieder abgesaugt werden.

Der Gebläsemotor 42 wird angesteuert von einer Steuerung 44, mit der auch ein Druckwächter 46 verbunden ist. Der Druckwächter 46 ist entweder an den flexiblen Schlauch 38 angeschlossen, wie hier gezeigt, oder unmittelbar an eine der Kammern 20 des flexiblen Wandelements 14. Der Druckwächter 46 liefert der Steuerung 44 Informationen über den Druck, der in den Kammern 20 herrscht. Die Steuerung 44 kann daher das Radialgebläse 40 abschalten, sobald das Wandelement 14 mit dem gewünschten Druck aufgeblasen ist oder der gewünschte Unterdruck erzeugt wurde.

Am oberen Rand des Wandelements 14 greift ein Antrieb 50 an, mit dem der obere Rand des Wandelements 14 und damit das Wandelement insgesamt abgesenkt oder hochgefahren werden kann. Der untere Rand des Wandelements verbleibt dabei auf der Unterlage 32.

Der Antrieb 50 ist hier als Seilzugsystem mit Hebeseilen 52 ausgeführt, die auf einem Rohr 54 aufgewickelt werden können.

Alternativ können auch Seilscheiben verwendet werden, die auf einer Antriebswelle sitzen.

Der Antrieb 50 weist einen Antriebsmotor 56 auf, der hier als Getriebemotor ausgeführt und innerhalb des Rohres 54 angeordnet ist. Dadurch ist eine gekapselte Bauweise erzielt, mit welcher der Antriebsmotor 56 vor Verschmutzung geschützt ist.

Gemäß einer alternativen Ausgestaltung ist der Antriebsmotor ein Getriebemotor, der außerhalb des Rohres 54 angeordnet ist.

Angesteuert werden kann der Antriebsmotor von der Steuerung 44, die auch das Gebläse 40 steuert.

Die Hebeseile 52 greifen am oberen Rand des Wandelements 14 an, insbesondere am Rohr 26.

Wie in der Detailansicht von Figur 4A zu sehen ist, kann das obere Rohr 26 auch mit einer Nut ausgeführt sein, in der ein Keder 58 aufgenommen ist, das am oberen Rand des Wandelements 14 angebracht ist.

Die Hebeseile 52 sind bei dieser Ausführungsform mit einer Halteklammer 59 verbunden, die das Rohr 26 außenseitig umgreift (mit Ausnahme der auf der Unterseite ausgebildeten Nut, in der der Keder 58 aufgenommen ist).

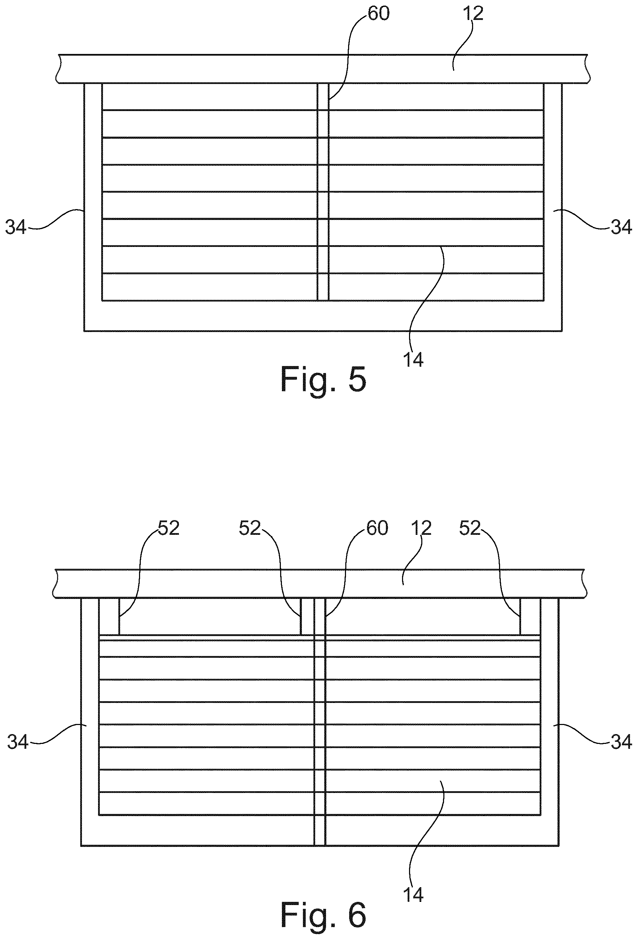

Wenn die zwischen den Führungen 34 gebildete Öffnung verschlossen werden soll, wird über den Antrieb 50 der obere Rand des Wandelements 14 vollständig nach oben gezogen, sodass die Öffnung vollständig geschlossen ist (siehe Figur 5). Dann werden mit dem Radialgebläse 40 die Kammern 20 des Wandelements 14 aufgeblasen, sodass sich dieses mit seinen beiden Lagen 16 dicht gegen die Ränder des Führungsprofils 34 anlegt. Trotz der Schweißnähte 18 zwischen benachbarten Kammern 20 ergibt sich hier ein durchgehender Kontakt mit den Führungsprofilen 34 (siehe die Detaildarstellung in Figur 1a), sodass (zumindest nahezu) kein Luftaustausch von innen nach außen oder außen nach innen möglich ist.

Wenn eine gewisse Belüftung des Gebäudes gewünscht wird, kann der obere Rand des Wandelements 14 geringfügig abgelassen werden (siehe Figur 6), sodass sich oberhalb des Wandelements 14 ein Spalt von wenigen Zentimetern bis hin in der Größenordnung von 25 cm ergibt. Hierfür muss der Druck im Wandelement 14 nicht verringert werden; die Kammern 20 des Wandelements werden unter dem Gewicht der Rohre 26, 30 geringfügig gestaucht, sodass sich der gewünschte Freiraum am oberen Ende ergibt.

Um im Zustand von Figur 6 die eintretende Luft innerhalb des Gebäudes zu verteilen, ist ein Luftführungselement 70 (siehe Figur 1) vorgesehen, das im Inneren des Gebäudes "hinter" dem oberen Rand des Wandsystems 10 angeordnet ist. Es kann sich hier beispielsweise um eine großflächige Kunststoffplane handeln, mit der die Luft weiter zur Innenseite des Gebäudes geführt wird, sodass sie nicht unmittelbar hinter dem Wandelement 14 nach unten fällt, sondern mehr zur Mitte des Gebäudes hin geführt wird.

Es ist auch möglich, bei vollständig hochgezogenem (also geschlossenem) Wandelement 14 eine gewisse Belüftung zu ermöglichen, indem der Druck in den Kammern 20 so weit verringert wird, bis sich das Wandelement 14 leicht von den Führungen 34 löst und sich ein Spalt bildet, durch den sich der gewünschte Luftaustausch zwischen dem Wandelement und den Führungen 34 ergeben kann.

Wenn die Öffnung vollständig freigegeben werden soll, wird die Luft aus den Kammern 20 abgelassen oder auch aktiv durch geeignete Ansteuerung des Radialgebläses 40 abgesaugt. Dann kann der obere Rand des Wandelements 14 vom Antrieb 50 abgelassen werden, sodass sich das Wandelement 14 unter der Wirkung des Gewichts der Rohre 26, 30 platzsparend am Boden zusammenlegt. Hierdurch ist eine maximale Belüftung des Gebäudes möglich.

In den Figuren 5 und 6 ist ein Abstützprofil 60 zu sehen, das etwa mittig zwischen den Führungen 34 angeordnet ist. Das Abstützprofil 60 hat einen geringfügigen Abstand vom flexiblen Wandelement, wenn dieses aufgeblasen ist. Es dient dazu, das flexible Wandelement dann abzustützen, wenn größere Lasten in Querrichtung wirken, beispielsweise unter Windeinfluss. Abhängig vom Abstand zwischen den Führungen 34 kann entweder auch auf das Abstützprofil 60 verzichtet werden, oder es können mehrere Abstützprofile im Abstand voneinander vorgesehen sein.

Gemäß einer nicht dargestellten Ausgestaltung der Erfindung kann auf die seitlichen Führungen verzichtet werden, und die Führung kann allein durch das Abstützprofil 60 verwirklicht werden.

Es ist auch möglich, dass das Wandsystem seitlich ohne separate Führungen auskommt, sondern dass die Seitenränder durch die angrenzenden Wände des Gebäudes geführt werden. Wenn das Wandelement aufgeblasen ist, legen sich die Seitenränder des Wandelements dicht an die Wand des Gebäudes an, so dass ein unerwünschter Luftaustausch dort (weitestgehend) unterbunden ist.

Mit dem beschriebenen Wandelement können problemlos größere Öffnungen flexibel geschlossen werden. Die Höhe der zu schließenden Öffnung der Seitenwand des Gebäudes kann 4,50 m oder sogar mehr betragen, und die Länge des Wandsystems kann bis zu 80 m betragen. Bei noch größeren Längen ist es dann vorteilhaft, zwei separate Wandsysteme vorzusehen, die voneinander unabhängig angesteuert werden können.

Ein besonderer Vorteil des Wandsystems 10 besteht darin, dass aufgrund der Luftfüllung in den Kammern 20 eine sehr gute thermische Isolation gegeben ist. Ein weiterer Vorteil besteht darin, dass trotz der Flexibilität des Wandelements 14 sich eine sehr gute Abdichtung in den Führungen 34 ergibt, da sich dort das Wandelement unter Druck anlegt.

Gemäß einer Weiterbildung ist vorgesehen, das nach unten zusammengefaltete Wandelement 14 nach oben anzuheben, um es unter die Traufe zu ziehen, beispielsweise wenn absehbar ist, dass das Wandelement 14 für einen längeren Zeitraum nicht benötigt ist. Hierfür wird das nach unten zusammengefaltete Wandelement 14 (zusammen mit dem unteren Rohr 28) beispielsweise am oberen Rohr 26 fixiert, und das dadurch gebildete Paket wird mittels der Hebevorrichtung 50 nach oben gezogen. In dieser Position ist es gut vor Verschmutzung geschützt.

## Patentansprüche

1. Wandsystem (10) mit einem flexiblen Wandelement (14), das zwischen einer hochgefahrenen und einer abgelassenen Stellung verstellbar ist und mit mindestens einer Kammer (20) versehen ist, einem Antrieb (50), mit dem das Wandelement (14) verstellt werden kann, und einer Druckquelle (40), mit der Luft oder ein Gas in die Kammer (20) eingebracht werden kann, wobei der Antrieb (50) ein Seilzugsystem (52) aufweist, **dadurch gekennzeichnet, dass** der Antrieb (50) einen Antriebsmotor (56) aufweist, wobei zwei Führungen (34) in der Form von einander gegenüberliegenden Führungsprofilen für das Wandelement (14) vorgesehen sind, wobei ein Luftführungselement (70) vorgesehen ist, das im oberen Abschnitt der Führung (34) entlang des Wandelements (14) angeordnet ist, und wobei das Wandelement (14) mit jeweils einem Verstärkungselement (26, 28) am oberen Rand des Wandelements (14), bzw. mit einem oberen Rohr (26), und am unteren Rand, bzw. mit einem unteren Rohr (28), versehen ist, wobei ein Verstärkungselement bzw. ein mittleres Rohr (30) etwa mittig zwischen dem oberen und dem unteren Rand angeordnet ist, wobei, wenn eine gewisse Belüftung des Gebäudes erwünscht ist, der obere Rand des Wandelements (14) unter dem Gewicht des oberen Rohers (26) und des mittleren Rohres (30) geringfügig abgelassen werden kann und die Kammern (20) des Wandelements geringfügig gestaucht werden, ohne dass hierfür der Druck im Wandelement (14) verringert werden muss, so dass sich oberhalb des Wandelements (14) ein Spalt von wenigen Zentimetern bis hin in der Größenordnung von 25 cm ergibt.

2. Wandsystem nach Anspruch 1, **dadurch gekennzeichnet, dass** das Wandelement (14) aus miteinander verschweißten Kunststofffolien (16) besteht.

3. Wandsystem nach Anspruch 1 oder Anspruch 2, **dadurch gekennzeichnet, dass** mehrere nebeneinanderliegenden Kammern (20) vorgesehen sind.

4. Wandsystem nach Anspruch 3, **dadurch gekennzeichnet, dass** die Kammern (20) durch Überströmöffnungen (22) miteinander verbunden sind.

5. Wandsystem nach einem der vorhergehenden Ansprüche, **dadurch gekennzeichnet, dass** ein Druckwächter (46) vorgesehen ist, der den Druck in der Kammer (20) erfasst.

6. Wandsystem nach einem der vorhergehenden Ansprüche, **dadurch gekennzeichnet, dass** die Führungsprofile (34) mit mindestens einem Dichtungsstreifen (36) versehen sind.

7. Wandsystem nach einem der vorhergehenden Ansprüche, **dadurch gekennzeichnet, dass** zwischen den Führungsprofilen (34) ein sich im Wesentlichen vertikal erstreckendes Abstützprofil (60) vorgesehen ist.

8. Wandsystem nach einem der vorhergehenden Ansprüche, **dadurch gekennzeichnet, dass** der Antriebsmotor (56) innerhalb eines Rohres (54) angeordnet ist, mit dem das Seil (52) aufgewickelt wird.

9. Wandsystem nach einem der vorhergehenden Ansprüche, **dadurch gekennzeichnet, dass** der Antriebsmotor (56) ein Getriebemotor ist, der eine Wickelwelle für das Seilzugsystem antreibt.

10. Wandsystem nach einem der vorhergehenden Ansprüche, **dadurch gekennzeichnet, dass** die Druckquelle ein Gebläse (40) ist.

11. Wandsystem nach Anspruch 10, **dadurch gekennzeichnet, dass** ein Gebläsemotor (42) vorgesehen ist, der in beiden Drehrichtungen betrieben werden kann.

12. Wandsystem nach einem der vorhergehenden Ansprüche, **dadurch gekennzeichnet, dass** ein Sockel (32) vorgesehen ist, an dem der unterer Rand des Wandelements an- oder aufliegt.

## Claims

1. A wall system (10) comprising a flexible wall element (14) which is adjustable between a raised position and a lowered position and is provided with at least one chamber (20), a drive (50) by means of which the wall element (14) can be adjusted, and a pressure source (40) by means of which air or a gas can be introduced into the chamber (20), the drive (50) including a cable or tackle system (52), **characterized in that** the drive (50) includes a drive motor (56), two guides (34) being provided in the form of opposing guide profiles for the wall element (14), an air guide element (70) being provided which is arranged in the upper section of the guide (34) along the wall element (14), and the wall element (14) being provided with a respective reinforcing element (26, 28) at the upper edge and at the lower edge of the wall element (14) or with an upper tube (26) and, respectively, a lower tube (28), a reinforcing element or a middle tube (30) being arranged approximately in the middle between the upper and lower edges, wherein when a certain ventilation of the building is desired, the upper edge of the wall element (14) can be slightly lowered under the weight of the upper tube (26) and the middle tube (30), and the chambers (20) of the wall element are slightly compressed without the pressure in the wall element (14) having to be reduced for this purpose, so that a gap of a few centimeters up to on the order of 25 cm is obtained above the wall element (14).

2. The wall system according to claim 1, **characterized in that** the wall element (14) consists of plastic sheets (16) welded to each other.

3. The wall system according to claim 1 or claim 2, **characterized in that** a plurality of chambers (20) are provided which are located side by side.

4. The wall system according to claim 3, **characterized in that** the chambers (20) are interconnected by overflow openings (22).

5. The wall system according to any of the preceding claims, **characterized in that** a pressure monitor (46) is provided which acquires the pressure in the chamber (20).

6. The wall system according to any of the preceding claims, **characterized in that** the guide profiles (34) are provided with at least one sealing strip (36).

7. The wall system according to any of the preceding claims, **characterized in that** a substantially vertically extending support profile (60) is provided between the guide profiles (34).

8. The wall system according to any of the preceding claims, **characterized in that** the drive motor (56) is arranged inside a tube (54) by means of which the cable (52) is wound up.

9. The wall system according to any of the preceding claims, **characterized in that** the drive motor (56) is a geared motor driving a winding shaft for the cable system.

10. The wall system according to any of the preceding claims, **characterized in that** the pressure source is a fan (40).

11. The wall system according to claim 10, **characterized in that** a fan motor (42) is provided which can be operated in both directions of rotation.

12. The wall system according to any of the preceding claims, **characterized in that** a base (32) is provided, against or on which the lower edge of the wall element rests.

## Revendications

1. Système de paroi (10), comprenant un élément de paroi flexible (14) qui est apte à être déplacé entre une position remontée et une position abaissée et qui est pourvu d'au moins une chambre (20), un entraînement (50) au moyen duquel l'élément de paroi (14) peut être déplacé, et une source de pression (40) au moyen de laquelle de l'air ou un gaz peut être introduit dans la chambre (20), l'entraînement (50) présentant un système de commande par câble (52), **caractérisé en ce que** l'entraînement (50) présente un moteur d'entraînement (56), deux guidages (34) étant prévus sous forme de profils de guidage opposés l'un à l'autre pour l'élément de paroi (14), un élément de guidage d'air (70) étant prévu, lequel est agencé dans le tronçon supérieur du guidage (34) le long de l'élément de paroi (14), et l'élément de paroi (14) étant pourvu d'un élément de renforcement (26, 28) respectif sur le bord supérieur de l'élément de paroi (14), ou d'un tube supérieur (26), et sur le bord inférieur, ou d'un tube inférieur (28), respectivement, un élément de renforcement ou un tube médian (30) étant agencé environ au milieu entre le bord supérieur et le bord inférieur, le bord supérieur de l'élément de paroi (14), lorsqu'une certaine aération du bâtiment est souhaitée, étant apte à être légèrement abaissé sous le poids du tube supérieur (26) et du tube médian (30), et les chambres (20) de l'élément de paroi étant légèrement comprimées sans devoir réduire la pression dans l'élément de paroi (14) pour cela, de sorte qu'une fente de quelques centimètres jusqu'à un ordre de 25 cm est obtenue au-dessus de l'élément de paroi (14).

2. Système de paroi selon la revendication 1, **caractérisé en ce que** l'élément de paroi (14) est composé de feuilles plastiques (16) soudées les unes aux autres.

3. Système de paroi selon la revendication 1 ou la revendication 2, **caractérisé en ce qu'**il est prévu plusieurs chambres (20) agencées les unes à côté des autres.

4. Système de paroi selon la revendication 3, **caractérisé en ce que** les chambres (20) sont reliées les unes aux autres par des orifices de décharge (22).

5. Système de paroi selon l'une des revendications précédentes, **caractérisé en ce qu'**il est prévu un avertisseur de pression (46) qui détecte la pression dans la chambre (20).

6. Système de paroi selon l'une des revendications précédentes, **caractérisé en ce que** les profils de guidage (34) sont pourvus d'au moins une bande d'étanchéité (36).

7. Système de paroi selon l'une des revendications précédentes, **caractérisé en ce qu'**un profil de support (60) s'étendant de manière sensiblement verticale est prévu entre les profils de guidage (34).

8. Système de paroi selon l'une des revendications précédentes, **caractérisé en ce que** le moteur d'entraînement (56) est agencé à l'intérieur d'un tube (54) au moyen duquel le câble (52) est enroulé.

9. Système de paroi selon l'une des revendications précédentes, **caractérisé en ce que** le moteur d'entraînement (56) est un motoréducteur entraînant un arbre d'enroulement pour le système de commande par câble.

10. Système de paroi selon l'une des revendications précédentes, **caractérisé en ce que** la source de pression est une soufflante (40).

11. Système de paroi selon la revendication 10, **caractérisé en ce qu'**il est prévu un moteur de soufflante (42) qui peut être mis en œuvre dans les deux sens de rotation.

12. Système de paroi selon l'une des revendications précédentes, **caractérisé en ce qu'**il est prévu un socle (32) contre lequel ou sur lequel le bord inférieur de l'élément de paroi repose.
